# EUROPEAN PATENT SPECIFICATION

(11) **EP 2 184 948 B1**
(45) Date of publication and mention of the grant of the patent: **17.12.2014**
(21) Application number: 08783710.0
(22) Date of filing: 22.07.2008
(51) Int. Cl.: H04W 84/00, G06Q 30/00, G06Q 30/02, H04L 29/08, H04W 4/02

(54) **METHOD FOR GENERATING USER ATTRIBUTE INFORMATION AND APPARATUS THEREOF**
VERFAHREN ZUR ERZEUGUNG VON BENUTZERATTRIBUTDATEN UND GERÄT DAFÜR
PROCÉDÉ DE GÉNÉRATION D'INFORMATION D'ATTRIBUT UTILISATEUR ET SON APPAREIL CORRESPONDANT

(30) Priority: 26.07.2007 CN 200710128490
(43) Date of publication of application: 12.05.2010
(73) Proprietor: Huawei Technologies Co., Ltd., Longgang District, Shenzhen Guangdong 518129 (CN)
(72) Inventor: FU, Pei, Shenzhen Guangdong 518129 (CN); SHAO, Gang, Shenzhen Guangdong 518129 (CN); ZHONG, Jieping, Shenzhen Guangdong 518129 (CN)
(74) Representative: Körber, Martin Hans
(86) International application number: PCT/CN2008/071709
(87) International publication number: WO 2009/012705

(56) References cited:
- EP-A2- 1 193 663
- CN-A- 1 420 464
- CN-A- 101 094 525
- CN-A- 101 146 262
- US-A1- 2003 200 192
- US-A1- 2005 076 078
- US-A1- 2006 270 419
- US-A1- 2007 094 157
- US-B1- 6 195 022
- US-B1- 6 697 824

## Description

### Field of the Invention

The present invention relates to communication technologies, and in particular, to a method and apparatus for generating user attribute information.

### Background of the Invention

With the progress of the society, individualized services are highlighted in all walks of life. It is currently an important topic to collect user-related information through the communication system and generate the user attribute information which reflects the user preferences, and, accordingly, provide individualized communication services and even other services for users.

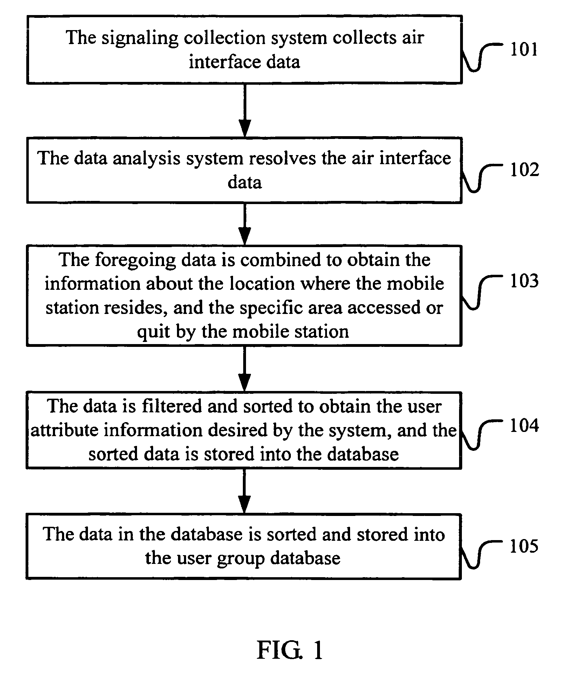

Figure 1 is a flowchart of a method for generating user-related information in the traditional art. The method includes the following steps:
101. The signaling collection system collects air interface data.

The signaling collection system collects the A-interface data between the Mobile Switching Center (MSC) and the Base Station Controller (BSC), collects the C-interface data between the MSC and the Home Location Register (HLR), and collects the interface data between the MSC and the Low-level Signaling Transfer Point (LSTP).

102. The data analysis system resolves the air interface data.

Specifically, the data analysis system resolves the A-interface data to obtain the information about the mobile station in the specific location; resolves the C-interface data to obtain the auxiliary information of the local mobile station, namely, resolves the authentication and service parameters of the mobile station to obtain the service parameters and authentication information of the local mobile station; and resolves the data of the MSC-to-LSTP interface to obtain the auxiliary information of the foreign mobile station, namely, resolves the authentication and service parameters of the mobile station to obtain the service parameters and authentication information of the foreign mobile station.

103. The foregoing data is combined to obtain the information about the location where the mobile station resides, and the specific area accessed or quit by the mobile station.

104. The data is filtered and sorted to obtain the data correlated with the user and the specific area and desired by the system, and the sorted data is stored into the database.

The data correlated with the user and the specific area and desired by the system includes: time segment of the user accessing the cell, stay period, home area of the user number, and frequency of the user accessing the cell.

105. The data in the database is sorted and stored into the user group database.

In the process of researching and practicing the traditional art, the inventor finds the following defects in the traditional art:

The method for collecting and generating user-related information in the traditional art cannot reflect the characteristic attributes of users accurately. The traditional art performs only comparison, filtering and sifting of the user locations and specific areas such as the advertisement marking area, and obtains only the information about the users correlated with the specific areas. In many circumstances, such correlation cannot reflect the user preferences, for example, a user who appears in a western restaurant on one occasion does not necessarily like western food.

US 20050076078 discloses a system and method for facilitating contact between people attending common events. The system comprises a members' database, including at least pictures of the members and contact information. A member attending an event notifies the system of his location and may subsequently browse through the pictures of the other participants to locate another person he wishes to contact.

US 20070094157 describes a method and system for adaptive digital asset and media management. Online assets and/or their associated structural context within a computer-based system are automatically modified based on assessed values derived from usage behaviors of users of the online assets. Adaptive media instances can be automatically generated, in conjunction with media instance rules and limits, from inferences of preferences derived from usage behaviors of users of computer-based systems.

### Summary of the Invention

Embodiments of the present invention provide a method, as disclosed in claim 1, and apparatus, as disclosed in claim 8, for generating user attribute information to reflect the characteristic attributes of users more accurately.

The objective may be achieved through the following embodiments:

A method for generating user attribute information in an embodiment of the present invention includes: receiving event information which carries a time range, a space range and an event ID of an event and which is stored in an event information repository, wherein the event information is input by a system user; querying unread events in the event information repository, after finding that the event information repository contains an unread event, reading the event, and sending the event information to a user information generating unit if determining that a read event meets trigger conditions; collecting users compliant with preset conditions according to the time range and space range of the event to form a user collection; obtaining extended attributes of the event from the event information corresponding to the event ID; and generating attribute information of the users in the user collection correlated with the event according to the extended attributes of the event; wherein the process of generating the attribute information of the users in the user collection correlated with the event comprises: after finding that a user information base contains no user entry for a user in the user collection, creating a new user entry in the user information base, adding the event corresponding to the event ID and the extended attributes of the event to the user entry, and setting a correlation count of the event and a correlation weight of the extended attributes of the event to obtain preference attributes of the user; after finding that the user information base contains the user entry for a user in the user collection, if the entry contains the event corresponding to the event ID, increasing the correlation count of the event, and further judging whether the entry contains the extended attributes of the event; if the entry contains the extended attributes of the event, increasing the correlation weight of the extended attributes of the event in the entry; if the entry contains no extended attribute of the event, adding a new extended attribute of the event and setting the correlation weight of the extended attribute.

An apparatus for generating user attribute information in an embodiment of the present invention includes: an event storing unit, adapted to store event information and send the event information out, wherein the event storing unit comprises an event information repository adapted to store the event information and an event trigger which is adapted to query the unread events in the event information repository, after finding that the event information repository contains an unread event, read the event, and send the event information to a user information generating unit if determining that a read event meets trigger conditions, wherein the event information is input by a system user; a user information generating unit, adapted to: receive the event information which is sent by the event storing unit and carries the time range, space range and event ID of the event, obtain the extended attributes of the event from the event information corresponding to the event ID, and generate the attribute information of the users in the user collection collected by the user collecting unit; and a user collecting unit, adapted to collect users compliant with preset conditions according to the time range and space range in the event information received by the user information generating unit to form a user collection; a user information database, adapted to store user entries which carry user attribute information, wherein the user information generating unit is configured to, after finding that the user information base contains no user entry for a user in the user collection, create a new user entry in the user information base, add the event corresponding to the event ID and the extended attributes of the event to the user entry, and set a correlation count of the event and a correlation weight of the extended attributes of the event to obtain preference attributes of the user; after finding that the user information base contains the user entry for a user in the user collection, if determining that the entry contains the event corresponding to the event ID, the user information generating unit is configured to increase the correlation count of the event, and further judge whether the entry contains the extended attributes of the event; if the entry contains the extended attributes of the event, the user information generating unit is configured to increase the correlation weight of the extended attributes of the event in the entry; if the entry contains no extended attribute of the event, the user information generating unit is configured to add a new extended attribute of the event and set the correlation weight of the extended attribute.

As described above, the technical solution of the embodiments includes: receiving event information which carries a time range, a space range and an event ID of an event; collecting users compliant with preset conditions according to the time range and space range of the event to form a user collection; obtaining extended attributes of the event from the event information corresponding to the event ID; and generating attribute information of the users in the user collection correlated with the event according to the extended attributes of the event. In the embodiments of the present invention, user attribute information is generated based on an event. The event information that describes the event can reflect possible complexity of the event with respect to the time and space, and carries the extended attributes which reflect the inherent commonalities of the event. The events involved by the users at different times and places are analyzed to obtain the preference attributes of the users. Therefore, the characteristic attributes of the users are reflected more accurately.

### Brief Description of the Drawings

Figure 1 is a flowchart of a method for generating user-related information in the traditional art;
Figure 2 is a flowchart of a method for generating user attribute information in an embodiment of the present invention;
Figure 3 is a flowchart of querying recent events in an embodiment of the present invention;
Figure 4 is a user filtering flowchart in an embodiment of the present invention;
Figure 5 is a generation flowchart in an embodiment of the present invention;
Figure 6 shows a first structure of an apparatus for generating user attribute information in an embodiment of the present invention; and
Figure 7 shows a second structure of an apparatus for generating user attribute information in an embodiment of the present invention.

### Detailed Description of the Invention

A method and apparatus for generating user attribute information are provided in an embodiment of the present invention to reflect the characteristic attributes of a user accurately.

An apparatus provided in an embodiment of the present invention includes: an external interface unit, adapted to input event information; an event storing unit, adapted to store the event information; a user information generating unit, adapted to generate user attribute information; and a user collecting unit, adapted to collect users compliant with preset conditions.

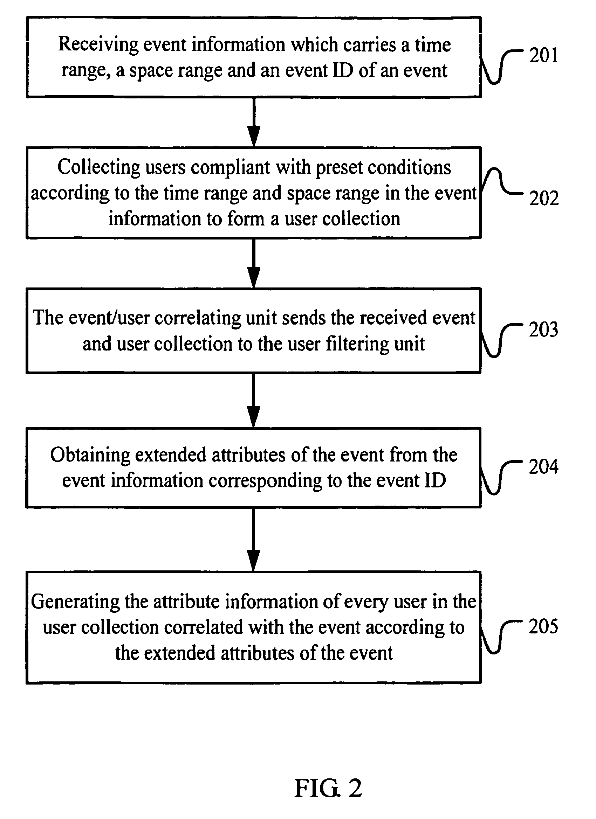

Figure 2 is a flowchart of a method for generating user attribute information in an embodiment of the present invention. The method may be executed by the above apparatus. The process includes the following steps 201 ∼205.

201. Receiving event information which carries a time range, a space range and an event ID of an event.

For example, an event/user correlating unit of the user information generating unit receives the event information from the event storing unit, where the event information carries the time range, space range and event ID of the event.

In another example, the event storing unit may include: an event information repository for storing event information, and an event trigger, wherein:

The event information stored in the event information repository may be input through an event input interface of the external interface unit. The external interface unit is a portal available for the system user to input events, and output event information to the event storing unit. An event input by the user includes at least: an event ID, time and space settings, and extended attributes of the event; and optionally includes: frequency of collecting users, conditions of correlating users, event type, and so on, as illustrated in Table 1.

**Table 1: Event description information**

| Field name | | Mandatory or Optional | Description |
|---|---|---|---|
| Event ID | | M (Mandatory) | Unique ID of an event. |
| Time and Space Settings | Time Range | M (Mandatory) | Start time and end time. |
| | Space Range | M (Mandatory) | The space range may be a cell ID. |
| | Repetition Frequency | O (Optional) | Frequency of occurrence in the corresponding time and space. |
| | Excluded Date | O (Optional) | Excluding special dates. |
| | Positioning Mode | O (Optional) | For selecting a positioning mode, for example, cell positioning or other area positioning technologies. |
| Collection Condition | | O (Optional) | The Collection Condition may be: (i) Users are collected for n times according to the frequency of collecting users within the time range of occurrence of the event, and the ratio of the count of presence of the user to the count of collection (namely, probability of presence) is greater than m; or (ii) the age range of the user, whether the user is a local user or a roaming user, the numbers that need to be excluded, and so on. |
| Frequency of Collecting Users | | O (Optional) | Count of collecting user locations per unit time within each time range of the event. |
| Extended Attributes of Event | | M (Mandatory) | Commonality (commonalities) and characteristic(s) of the event, for example, possible extended attributes of a soccer match are "world cup" and "Chinese team". |

It should be explained that, the time and space settings in the description information include a triplet composed of time range, space range, and repetition frequency, or a triplet collection. The time and space settings may also include the excluded dates and the positioning mode corresponding to the triplet. The space range may be represented by a cell ID or others, depending on the location service system in use and the positioning mode selected by the system user. The repetition frequency indicates the regularity of occurrence of the event in the time range and space range corresponding to the triplet, and may be represented by "daily", "weekly", "monthly", and so on.

The collection condition in the description information are the conditions of correlating the users who fall within the range of event occurrence, and may be a lower threshold of presence of the user, or a limitation of the user service type. The collection condition may also be: the age range of the user, or whether the user is a local user or a roaming user. The frequency of collecting users is a count of collecting the user location per unit time. Extended attributes of an event are important in the event description information, and may be commonalities and characteristics (such as the category and features) of the event. An event may have many extended attributes, which may be converted into preference attributes of the user through user correlation. For example, the extended attributes of a soccer match may be "world cup" and "Chinese team".

Moreover, the space range may be input through a graphical interface of the geographic information system. The geographic information system includes map data, key areas arousing attention of the user, or location marking data, and may also include the geographic range data of the cell in the communication network. The system user selects the location and range of the event on the map through the geographic information system, and the geographic information system converts the selection into the value and range in a certain coordinate system, or the cell ID of the cell. The space range may also be input by inputting the value and range of a cell in a coordinate system, or inputting the cell ID.

For example, if a singer X holds a rock concert in the stadium of city C on a specific day, the event may be represented like Table 2:

**Table 2 : Example of event description information**

| |
|---|
| <event A> |
| <event ID>A</event ID> |
| <time and space settings> |
| <range 1> |
| <location>xxx</location> |
| <time> |
| <start time>xxx</start time> |
| <end time>xxx</end time> |
| </time> |
| <frequency>no repetition</frequency> |
| <excluded dates>none</excluded dates> |
| <positioning mode>cell</positioning mode> |
| </range 1> |
| </time and space settings> |
| <extended attributes of event> |
| <attribute 1>rock music</attribute 1> |
| <attribute 2>singer X</attribute 2> |
| </extended attributes of event> |
| <collection frequency>1/20 min</collection frequency> |
| <collection condition> |
| <condition 1>probability of occurrence is greater than 0.5</condition 1> |
| </collection condition> |
| </event A> |

The event trigger of the event storing unit is adapted to: query the unread events in the event information repository, and send the event information to the user information generating unit if determining that the read event meets the trigger conditions. The event trigger detects the recent events in the event information repository, and sends a recent event notification to the event/user correlating unit of the user information generating unit when any recent event occurs. The event trigger is primarily responsible for querying the recent event, and runs a recent event query process at an interval of t.

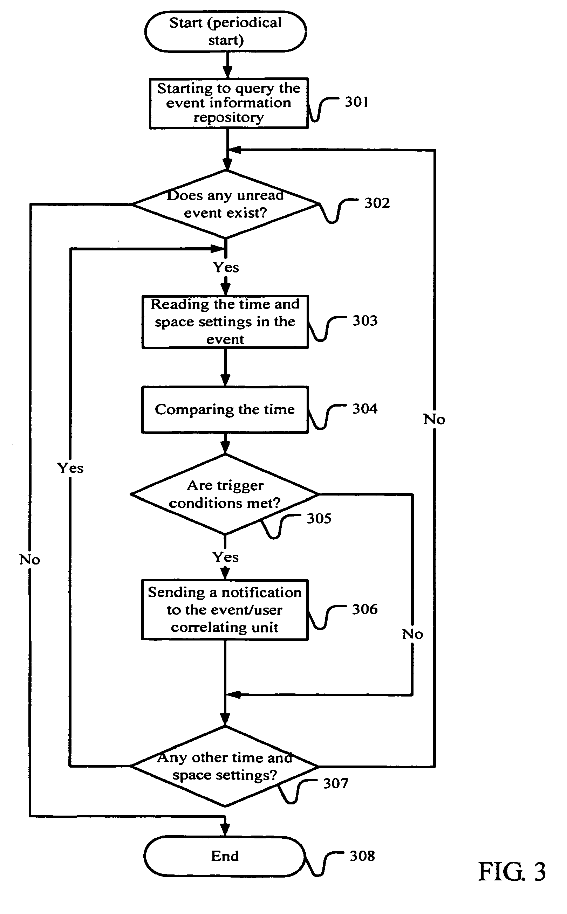

For example, Figure 3 shows a recent event query process in an embodiment of the present invention. The process includes the following steps301∼308:
301. Starting to query the event information repository.
302. Judging whether the event information repository contains any event unread in this process; proceeding to step 303 if any, or else proceeding to step 308 to end the process.
303. Reading the time and space settings in the event.

When finding a recent event, the recent event query process records the event as event A. The time and space settings in event A are read in this step.

304. Comparing the time.

According to the start time, end time and event repetition frequency in the time and space settings, the recent start time and end time of the event are calculated out and recorded as (ts, te).

305. Judging whether the trigger conditions are met; proceeding to step 306 if the trigger conditions are met, or else step 307.

If the trigger condition is time, the recent start time of the event falls within the period of this process, and the start time of the event has arrived, proceeding to step 306, or else step 307.

306. Sending a notification to the event/user correlating unit, and proceeding to step 307.

For example, a recent event notification is sent to the event/user correlating unit. The event notification includes at least: event A and its description information, start time and end time of recent occurrence of event A (considering that the event may occur periodically) and the corresponding location range; and optionally includes the frequency of collecting users, and the positioning mode.

307. Querying whether the event contains any unread time and space settings, proceeding to step 303 if any, or else step 302.

308. Ending the process of query.

202. Collecting users which are compliant with preset conditions, according to the time range and space range in the event information, to form a user collection.

For example, after receiving the event information from the event storing unit, the event/user correlating unit extracts the relevant information, including the event ID, start time, end time, corresponding space range, collection frequency, and positioning mode, to form a user collection request which is sent to the user collecting unit.

In another example, the user collecting unit includes two modules: a user collection controller, and a location-based user collection interface. When the user collection controller receives the user collection request from the event/user correlating unit, the user collection controller reads the start time and end time of the event, the corresponding space range and the frequency of collecting users in the user collection request. According to the positioning mode, the user collection controller sends the space range of collection to the location-based user collection interface at specific time or at a collection frequency for the purpose of collecting users. The location-based user collection interface uses the space range input by the user collection controller to invoke the area positioning system to obtain the current users in this space range, and returns the current users to the user collection controller. The user collection controller sends the collection of collected users along with the corresponding event to the event/user correlating unit.

An area positioning system can collect all users in a specified area. The area positioning system may be a positioning system based on a Global Positioning System (GPS), or a radio network Assisted Global Positioning System (AGPS), or a positioning system based on cell ID plus Round Trip Time (RTT) or Observed Time Difference of Arrival (OTDOA) technology.

The following example is a method for positioning a cell, namely, positioning all users in a cell. A signaling collecting apparatus obtains the users corresponding to each cell ID by collecting the signaling on the A-interface between the MSC and the BSC, the signaling on the C-interface between the MSC and the HLR, and the signaling on the interface between the MSC and the High-/Low-level Signaling Transfer Point (H/LSTP). Three parameters "LAC-CI", "TMSI" and "time" are collected in the location update signaling of the A-interface, where LAC-CI represents Local Area Code-Cell ID and TMSI represents Temporary Mobile Subscriber Identity; three parameters "MSISDN", "IMSI" and "time" are collected in the C-interface signaling, where MSISDN represents Mobile Station Integrated Services Digital Network number and IMSI represents International Mobile Subscriber Identity; and three parameters "TMSI", "IMSI" and "time" are collected in the MAP_Send_Identification signaling of the H/LSTP interface. By using (TMSI, IMSI, time) and (LAC-CI, TMSI, time), (IMSI, LAC-CI, time) is obtained through correlation between time and TMSI; by using (IMSI, LAC-CI, time) and (MSISDN, IMSI, time), (MSISDN, LAC-CI, time) is obtained through IMSI correlation. The finally obtained user information includes MSISDN, update time, and LAC-CI cell value.

203. The event/user correlating unit sends the received event and user collection to a user filtering unit; the user filtering unit filters the users according to the collection condition to obtain a collection of correlated users, and sends the collection of correlated users and the event information to the user information generator.

For example, after receiving the event and user collection from the event/user correlating unit, the user filtering unit starts the process of filtering users. Upon completion of the user filtering process, a collection of users correlated with event A is output. The input in the user filtering process is event A and the corresponding user collection U. The users compliant with all collection condition are found in U according to the collection condition of event A to form another collection U'. If U' is not empty, U' and event A are sent to the user information generator.

In the filtering process, the original user information base is queried. The original user information base stores the relevant user information such as user type, service type, and user age. The original user information base may be a user profile database in the communication service system or another network element which stores user information in the communication system. In this embodiment, the original user information base is set on the user information generating unit. However, the present invention is not limited to that, and the original user information base may also be set independently.

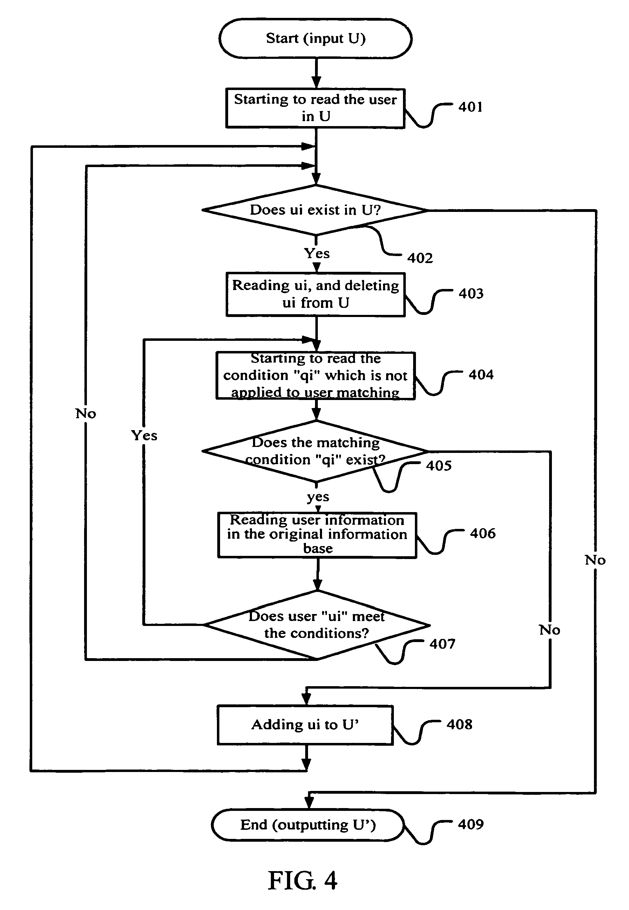

Figure 4 is an exemplary user filtering flowchart in an embodiment. The process includes the following steps 401∼409:
401. Starting to read the users in the user collection U.
402. Judging whether the user collection U contains a user "uᵢ"; proceeding to step 403 if the "uᵢ "exists, or else step 409.
403. Reading the user "uᵢ" in U, deleting uᵢ, and proceeding to step 404.
404. Starting to read the condition "qᵢ" which is not applied to user matching in the event.
405. Judging whether any condition "qᵢ" not applied to user matching exists; proceeding to step 406 if qᵢ exists, or else step 408.
406. Reading the information about user "uᵢ" in the original user information base, and proceeding to step 407.
407. Judging whether the user "uᵢ" meets condition "qᵢ"; proceeding to step 404 if the condition "qᵢ" is met, or else step 402.
408. Adding "uᵢ" to the user collection U', and proceeding to step 402.
409. If U' is not empty, outputting U'; otherwise, ending the process.

204. Obtaining the extended attributes of the event from the event information corresponding to the event ID.

For example, the user information generator obtains the extended attributes of the event from the event information corresponding to the event ID. If the event information previously sent by the event storing unit carries the extended attributes of the event, the event/user correlating unit sends the extended attributes to the user information generator through the user filtering unit, and the user information generator obtains the extended attributes of the event directly from the received event information. If the event information previously sent by the event storing unit contains no extended attributes of the event, the user information generator obtains the extended attributes from the event storing unit. The user information generator sends a request carrying an event ID to the event storing unit, requesting to obtain the extended attributes of the event. After receiving the request, the event storing unit returns the extended attributes of the event corresponding to the event ID to the user information generator.

205. Generating the attribute information of every user in the user collection correlated with the event according to the extended attributes of the event.

The user information generator generates the attribute information of every user in the user collection correlated with the event according to the obtained extended attributes of the event. The user information base is invoked in the process of generating the user attribute information. In this embodiment, the user information base is set on the user information generating unit. However, the present invention is not limited to that, and the user information base may also be set independently.

The user information structure of the user data in the user information base indicates all the events and attributes correlated with the user, including at least: user number, correlated attributes and the corresponding correlation weight, and optionally including correlated events and the corresponding correlation count. Table 3 shows the user information structure:

**Table 3: User information structure**

| |
|---|
| <user 1> |
| <number> |
| </number> |
| <event correlation> |
| <event 1> |
| <event ID></event ID> |
| <correlation count></correlation count> |
| </event 1> |
| <event 2> |
| <event ID></event ID> |
| <correlation count></correlation count> |
| </event 2> |
| </event correlation> |
| <preference attribute> |
| <attribute 1> |
| <attribute name></attribute name> |
| <correlation weight></correlation weight> |
| </attribute 1> |
| <attribute 2> |
| <attribute name></attribute name> |
| <correlation weight></correlation weight> |
| </attribute 2> |
| </preference attribute> |
| </user 1> |

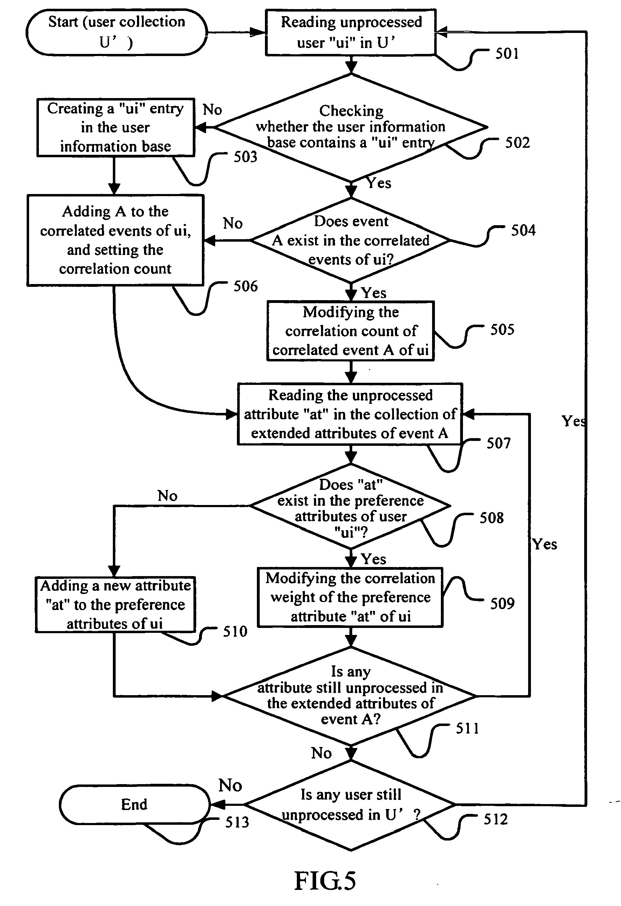

Figure 5 is an exemplary generation flowchart in an embodiment. The process includes the following steps 501∼513:
501. Reading an unprocessed user from the user collection U', recording the user as "uᵢ", and deleting "uᵢ" from U'.
502. Judging whether the user information base contains a user "uᵢ"; proceeding to step 504 if ui exists, or else step 503.
503. Creating a user "uᵢ" in the user information base, adding the user information such as the uᵢ number, and proceeding to step 506.
504. Judging whether the user "uᵢ" in the user information base has a correlated event A; proceeding to step 505 if the correlated event A exists, or else step 506.
505. Increasing the correlation count of the user "uᵢ" in the user information base with event A by 1, and proceeding to step 507.
506. Creating a new correlated event A in the correlated event of ui, setting the correlation count to 1, and proceeding to step 507.
507. Reading the unprocessed extended attribute, namely, preference attribute "at", in the collection of extended attributes of event A.
508. Querying the user information base to check whether the user "uᵢ" has a preference attribute "at"; and proceeding to step 509 if the user "uᵢ" has a preference attribute "at", or else step 510.
509. Increasing the correlation weight corresponding to the preference attribute "at" of the user "uᵢ" in the user information base by 1, and proceeding to step 511.
510. Creating a new preference attribute "at" of the user "uᵢ" in the user information base, setting the correlation weight to 1, and proceeding to step 511.
511. Judging whether the collection of extended attributes of event A contains any unprocessed attribute; proceeding to step 507 if any, or else step 512.
512. Judging whether the user collection U' contains any unprocessed user; proceeding to step 501 if any, or else step 513.
513. Ending the process.

A complete process of generating user attribute information is described below through an example under specific application environment..

In the example, Event A1 is: Singer X holds a personal concert in stadium C of city B at 19:00-21:00 April 1, 2007. Event A2 is: Singer X endorses brand Y on plaza D of city B at 10:00-11:00 May 01, 2007. The process includes the following steps (i)∼(iii).

### (i) Inputting the event

Events A 1 and A2 are input into the event information repository through the event input interface. For A1, the input start time and end time are "19:00-21:00 April 1, 2007"; through the geographic information system, stadium C in place B is selected to obtain cell 1; the repetition frequency is set to "no repetition"; the positioning mode is set to "cell positioning"; the condition of correlating users is set to "probability of presence is greater than 0.8"; and "X" and "concert" are input as extended attributes of the event. For A2, the input start time and end time are "10:00-11:00 May 01, 2007"; through the geographic information system, plaza D in place B is selected to obtain cell 2; the repetition frequency is set to "no repetition"; the positioning mode is set to "cell positioning"; the condition of correlating users is set to "probability of presence is greater than 0.8"; and "X" and "Y" are input as extended attributes of the event.

Through the event input interface, the events A 1 and A2 are stored in the event information repository through a logical structure illustrated in Table 4.

**Table 4: Information about events A 1 and A2**

| |
|---|
| <event A1> |
| <event ID>A1</event ID> |
| <time and space settings> |
| <range 1> |
| <location>Cell-ID1</location> |
| <time> |
| <start time>2007-04-01 19:00:00</start time> |
| <end time>2007-04-01 21:00:00</end time> |
| </time> |
| <frequency>no repetition</frequency> |
| <positioning mode>cell</positioning mode> |
| </range 1> |
| </time and space settings> |
| <extended attributes of event> |
| <attribute 1>concert</attribute 1> |
| <attribute 2>X</attribute 2> |
| </extended attributes of event> |
| <collection condition> |
| <condition 1>probability of occurrence is greater than 0.8</condition 1> |
| </collection condition> |
| <collection frequency>1/5 min</collection frequency> |
| </event A1> |
| <event A2> |
| <event ID>A2</event ID> |
| <time and space settings> |
| <range 1> |
| <location>Cell-ID2</location> |
| <time> |
| <start time>2007-05-01 10:00:00 AM:00</start time> |
| <end time>2007-05-01 11:00:00 AM:00</end time> |
| </time> |
| <frequency>no repetition</frequency> |
| <positioning mode>cell</positioning mode> |
| </range 1> |
| </time and space settings> |
| <extended attributes of event> |
| <attribute 1>X</attribute 1> |
| <attribute 2>Y</attribute 2> |
| </extended attributes of event> |
| <collection condition> |
| <condition 1>probability of occurrence is greater than 0.8</condition 1> |
| </collection condition> |
| <collection frequency>1/5 min</collection frequency> |
| </event A1> |

### (ii) Triggering the event

The event trigger sends an event notification "infor1" to the event/user correlating unit at 19:00:00 April 1, 2007. Infor1 carries these logical contents: event A1 and its description information, current time range which is (2007-04-01 19:00:00, 2007-04-01 21:00:00) of event A1, location "cell ", and positioning mode "cell".

The event trigger sends an event notification "infor2" to the event/user correlating unit at 10:00:00 May 1, 2007. Infor2 carries these logical contents: event A2 and its description information, current time range which is (2007-05-01 10:00:00, 2007-05-01 11:00:00) of event A2, location "cell2", and positioning mode "cell".

### (iii) Generating user attribute information

### (iii.1) Generating user attribute information based on event A 1

After receiving the event notification "infor1" from the event trigger, the event/user correlating unit extracts the start time "2007-04-01 19:00:00", end time "2007-04-01 21:00:00", location "cell1", positioning mode "cell", and collection frequency "1/5 min" of the event to form a user collection request, which is sent to the user collection controller. According to (A1, 2007-04-01 19:00:00, 2007-04-01 21:00:00, cell1, cell), the user collection controller uses the positioning mode "cell" to invoke the user collection interface every 5 minutes within the specified time range, thus obtaining a user collection "U1". Information of (U1,A1) is returned by the user collection interface to the user collection controller, and is reported by the user collection controller to the event/user correlating unit.

The U1 data is shown in Table 5:

**Table 5: User collection table**

| No. | User Number | Presence count |
|---|---|---|
| 1 | 1369191abcd | 22 |
| 2 | 1354518dcba | 4 |
| ... | ... | ... |

After receiving the user collection U1, the event/user correlating unit sends the event collection U1 and the description information of event A1 to the user filtering unit. According to the condition of correlating users "probability of presence is greater than 0.8", the user filtering unit filters out the user 1354518dcba to obtain a user collection U1', which is composed of the users correlated with event A1. The user filtering unit sends the event A1 and its description information, and user collection U1' to the user information generating unit.

The U1' data is shown in Table 6:

**Table 6: users correlated with event A1**

| No. | User Number |
|---|---|
| 1 | 1369191abcd |
| ... | ... |

After receiving the event A1 and the user collection U1' from the user filtering unit, the user information generating unit inserts a new entry into the user information base. The logical structure of the user information base is shown in Table 7:

**Table 7: Data of a user information base**

| |
|---|
| <user 1> |
| <number>1369191abcd </number> |
| <event correlation> |
| <event 1> |
| <event ID>A1</event ID> |
| <correlation count>1</correlation count> |
| </event 1> |
| </event correlation> |
| <preference attribute> |
| <attribute 1> |
| <attribute name>X<attribute name> |
| <correlation weight>1</correlation weight> |
| </attribute 1> |
| <attribute 2> |
| <attribute name>concert</attribute name> |
| <correlation weight>1</correlation weight> |
| </attribute 2> |
| </preference attribute> |
| </user 1> |
| <user 2> |
| ... |
| ... |

### (iii.2) Generating user attribute information based on event A2

After receiving the event notification "infor2" from the event trigger, the event/user correlating unit extracts the start time "2007-05-01 10:00:00", end time "2007-05-01 11:00:00", location "cell2", positioning mode "cell", and collection frequency "1/5 min" of the event to form a user collection request, which is sent to the user collection controller. According to (A2, 2007-05-01 10:00:00, 2007-05-01 11:00:00, cell2, cell), the user collection controller uses the positioning mode "cell" to invoke the user collection interface every 5 minutes within the specified time range, thus obtaining a user collection "U2". Information of (U2, A2) is returned by the user collection interface to the user collection controller, and is reported by the user collection controller to the event/user correlating unit.

The U2 data is shown in Table 8:

**Table 8: User collection table**

| No. | User Number | User Presence count |
|---|---|---|
| 1 | 1369191abcd | 10 |
| 2 | 1354518ddda | 3 |
| ... | ... | ... |

After receiving the user collection U2, the event/user correlating unit sends the event collection U2 and the description information of event A2 to the user filtering unit. According to the condition of correlating users "probability of presence is greater than 0.8", the user filtering unit filters out the user 1354518ddda to obtain a user collection U2', which is composed of the users correlated with event A2. The user filtering unit sends the event A2 and its description information, and user collection U2' to the user information generating unit.

The U2' data is shown in Table 9:

**Table 9: Users correlated with event A2**

| No. | User Number |
|---|---|
| 1 | 1369191abcd |
| ... | ... |

After receiving the event A2 and the user collection U2' from the user filtering unit, the user information generating unit updates the data of user 1 in the user information base. The logical structure of the user information base is shown in Table 10:

**Table 10: Data of a user information base**

| |
|---|
| <user 1> |
| <number>1369191abcd </number> |
| <event correlation> |
| <event 1> |
| <event ID>A1 </event ID> |
| <correlation count>1</correlation count> |
| </event 1> |
| <event 2> |
| <event ID>A2</event ID> |
| <correlation count></correlation count> |
| </event 2> |
| </event correlation> |
| <preference attribute> |
| <attribute 1> |
| <attribute name>X</attribute name> |
| <correlation weight>2</correlation weight> |
| </attribute 1> |
| <attribute 2> |
| <attribute name>concert</attribute name> |
| <correlation weight>1</correlation weight> |
| </attribute 2> |
| <attribute 3> |
| <attribute name>Y</attribute name> |
| <correlation weight>1</correlation weight> |
| </attribute 3> |
| </preference attribute> |
| </user 1> |
| <user 2> |
| ... |

Corresponding to the method for generating user attribute information detailed above, an apparatus for generating user attribute information is provided in an embodiment of the present invention.

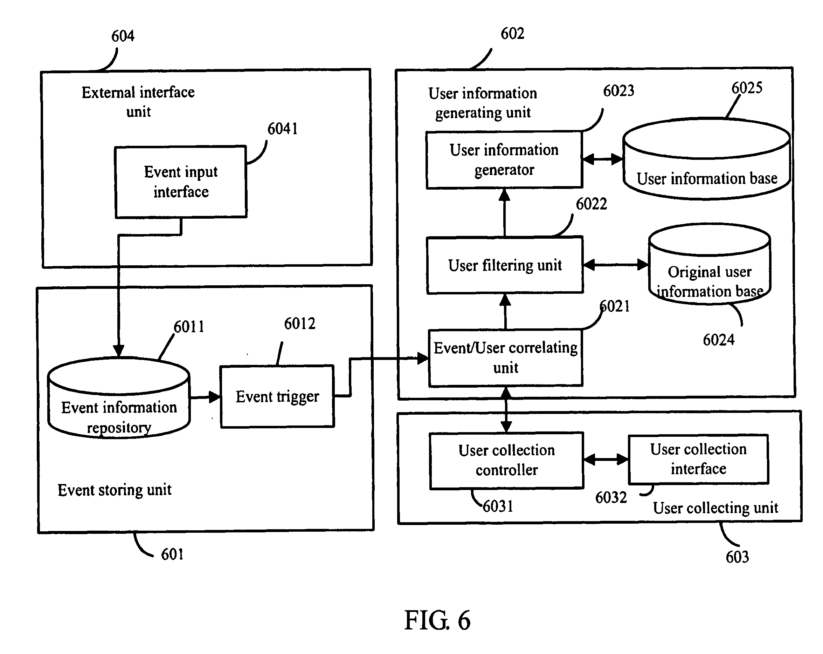

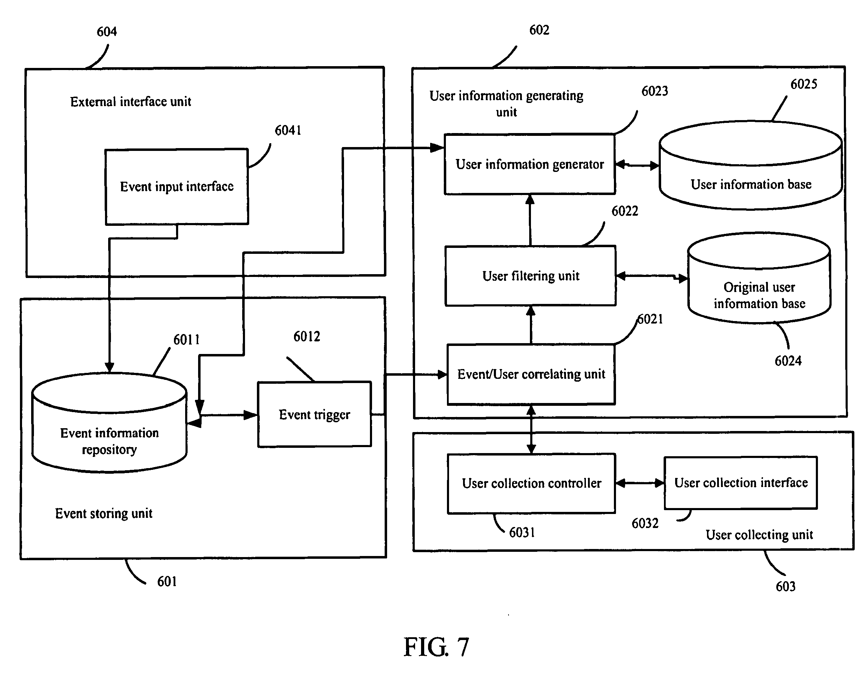

Figure 6 shows a first structure of an apparatus for generating user attribute information in an embodiment of the present invention. Figure 7 shows a second structure of an apparatus for generating user attribute information in an embodiment of the present invention. The embodiment showed by Figure 7 differs from that showed by Figure 6 in that: in Figure 7, a user information generator is connected to an event information repository.

The apparatus for generating user attribute information includes: an event storing unit 601, a user information generating unit 602, a user collecting unit 603, and an external interface unit 604.

In an example, the external interface unit 604 includes an event input interface 6041, adapted to input event information into an event information repository 6011. The external interface unit 604 is a portal available for the system user to input events, and output event information to the event storing unit 601. An event input by the user includes at least: an event ID, time and space settings, and extended attributes of the event; and optionally includes: the frequency of collecting users, collection condition, event type, and so on. The units are detailed below:

The event storing unit 601 is adapted to store event information and send the event information out.

The user information generating unit 602 is adapted to: receive the event information which carries the time range, space range and event ID of the event, obtain the extended attributes of the event from the event information corresponding to the event ID, and generate user attribute information.

The user collecting unit 603 is adapted to collect users compliant with preset conditions according to the time range and space range of the event in the event information received by the user information generating unit 602 to form a user collection. The user information generating unit 602 generates the attribute information of every user correlated with the event in the user collection collected by the user collecting unit 603.

In another example, the event storing unit 601 includes: an event information repository 6011, and an event trigger 6012, wherein:

The event information repository 6011 is adapted to store event information. The event trigger 6012 is adapted to: after finding that the event information repository 6011 contains an unread event, read the event; determine the time range and space range of the event to occur according to the time range, space range and repetition frequency which are set for the read event; and send the event information of the event to the user information generating unit 602 if determining that the read event meets the trigger conditions.

In another example, the user collecting unit 603 further includes: a user collection controller 6031, and a user collection interface 6032, wherein:

The user collection controller 6031 is adapted to obtain the event information received by the user information generating unit 602. The user collection interface 6032 is adapted to collect the users compliant with preset conditions according to the event information to form a user collection. The detailed process of collecting the users compliant with the preset conditions is: collecting user signals within the time range and space range to obtain a user collection; if the event information further carries a collection frequency, collecting the users at the collection frequency; and/or if the event information further carries a positioning mode, collecting the users according to the positioning mode. The user collection interface 6032 obtains the user collection by obtaining and resolving the air interface signaling between network elements in the communication system according to the preset conditions.

When the user collection controller 6031 receives the user collection request from the event/user correlating unit 6021, the user collection controller 6031 reads the start time and end time of the event, the corresponding space range and the frequency of collecting users in the user collection request. According to the positioning mode, the user collection controller sends the space range of collection to the location-based user collection interface 6032 at specific time or at a collection frequency for the purpose of collecting users. The location-based user collection interface 6032 uses the space range input by the user collection controller 6031 to invoke the area positioning system to obtain the current users in this space range, and returns the current users to the user collection controller 6031. The user collection controller 6031 sends the collection of collected users along with the corresponding event to the event/user correlating unit 6021.

In another example, the user information generating unit 602 includes: an event/user correlating unit 6021, a user filtering unit 6022, a user information generator 6023, wherein:

The event/user correlating unit 6021 is adapted to receive event information which carries the time range, space range and event ID of the event; the user filtering unit 6022 is adapted to filter the users in the user collection collected by the user collecting unit 603 according to the collection condition to obtain a filtered user collection; and the user information generator 6023 is adapted to: obtain the extended attributes of the event in the event information corresponding to the event ID, and generate the attribute information corresponding to every user in the user collection correlated with the event according to the extended attributes of the event.

It should be noted that: When the user information generator 6023 obtains the extended attributes of the event in the event information corresponding to the event ID, if the event information previously sent by the event storing unit 601 carries the extended attributes of the event, the event/user correlating unit 6021 sends the extended attributes to the user information generator 6023 through the user filtering unit 6022, and the user information generator 6023 obtains the extended attributes of the event directly from the received event information, as shown in Figure 6; if the event information previously sent by the event storing unit 601 carries no extended attribute of the event, the user information generator 6023 obtains the extended attributes of the event from the event storing unit 601. The user information generator 6023 sends a request carrying an event ID to the event storing unit 601, requesting the extended attributes of the event. After receiving the request, the event storing unit 601 returns the extended attributes of the event corresponding to the event ID to the user information generator 6023, as shown in Figure 7.

Optionally, the user information generating unit 602 further includes: an original user information base 6024, and a user information base 6025. In this embodiment, the original user information base 6024 and the user information base 6025 are set on the user information generating unit 602. However, the present invention is not limited to that, and the original user information base 6024 and the user information base 6025 may also be set independently.

The original information base 6024 is adapted to store user information. The user filtering unit 6022 reads a user in the user collection collected by the user collecting unit 603, and obtains the information about the read user from the original user information base 6024. If the read user meets the condition of correlating users, the read user is added to the new user collection.

The user information base 6025 is adapted to store the user entries which carry user attribute information. After finding that the user information base 6025 contains no user entry incorporated in the user collection, the user information generator 6023 creates a new user entry in the user information base 6025, adds the event corresponding to the event ID and the extended attributes of the event to the entry, and sets the correlation count of the event and the correlation weight of the extended attributes of the event. After the user information generator 6023 finds that the user information base 6025 contains the user entry incorporated in the user collection, if the entry includes the event corresponding to the event ID, the user information generator 6023 modifies the correlation count of the event, and further judges whether the entry includes the extended attributes of the event; if the entry includes the extended attributes of the event, the user information generator 6023 modifies the correlation weight of the extended attributes of the event in the entry; if the entry includes no extended attribute of the event, the user information generator 6023 adds a new extended attribute of the event and sets the correlation weight of the extended attribute.

In summary, the technical solution of the embodiments includes: receiving event information which carries a time range, a space range and an event ID of an event; collecting users compliant with preset conditions according to the time range and space range in the event information to form a user collection; obtaining extended attributes of the event from the event information corresponding to the event ID; and generating attribute information of the users in the user collection correlated with the event according to the extended attributes of the event. In the embodiments of the present invention, user attribute information is generated based on an event. The event information that describes the event can reflect possible complexity of the event with respect to the time and space, and carries the extended attributes which reflect the inherent commonalities of the event. The events involved by the users at different times and places are analyzed to obtain the preference attributes of the users. Therefore, the characteristic attributes of the users is reflected more accurately.

Further, in some other embodiments of the present invention, the user collection may be collected according to the collection frequency and positioning mode carried in the event information, and the collected user collection may be further filtered according to the collection condition. The filtered user collection is analyzed comprehensively to obtain the preference attributes of the users in the collection.

The above is a detailed description of a method and apparatus for generating user attribute information in the embodiments of the present invention. Although the invention has been described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for generating user attribute information, comprising:
receiving (201) event information which carries a time range, a space range and an event ID of an event and which is stored in an event information repository;
wherein the event information is input by a system user,
querying (301) unread events in the event information repository, after finding that the event information repository contains an unread event, reading the event, and sending the event information to a user information generating unit if determining that a read event meets trigger conditions;
collecting (202) users compliant with preset conditions according to the time range and space range of the event to form a user collection;
obtaining (204), by the user information generating unit, extended attributes of the event from the event information corresponding to the event ID; and
generating (205), by the the user information generating unit, attribute information of the users in the user collection correlated with the event according to the extended attributes of the event;
wherein the process of generating the attribute information of the users in the user collection correlated with the event comprises:
after finding (502) that a user information base contains no user entry for a user in the user collection, creating (503) a new user entry in the user information base, adding (506) the event corresponding to the event ID and the extended attributes of the event to the user entry, and setting a correlation count of the event and a correlation weight of the extended attributes of the event in said user entry to obtain preference attributes of the user;
after finding (502) that the user information base contains the user entry for a user in the user collection, if the user entry contains the event corresponding to the event ID (504), increasing (505) the correlation count of the event, and further judging (508) whether the user entry contains the extended attributes of the event; if the user entry contains the extended attributes of the event, increasing (509) the correlation weight of the extended attributes of the event in the user entry; if the user entry contains no extended attribute of the event, adding (510) a new extended attribute of the event in the user entry and setting the correlation weight of the extended attribute.

2. The method of claim 1, wherein:
the process of obtaining the extended attributes of the event from the event information corresponding to the event ID is:
obtaining the extended attributes of the event from the received event information if the event information further carries the extended attributes of the event; or
obtaining the extended attributes of the event in the event information corresponding to the event ID from the event information repository according to the event ID in the received event information.

3. The method of claim 1, wherein:
the received event information further carries a collection frequency; and
the process of collecting the users compliant with the preset conditions to form the user collection is: collecting user signals within the time range and space range at the collection frequency in the event information to form the user collection.

4. The method of claim 1, wherein:
the received event information further carries a positioning mode; and
the process of collecting the users compliant with the preset conditions to form the user collection is: after selecting the positioning mode, collecting user signals within the time range and space range according to the selected positioning mode to form the user collection.

5. The method of any of claims 1-4, wherein:
the received event information further carries collection condition;
after collecting the users compliant with the preset conditions to form the user collection, the method further comprises: filtering the collected user collection according to the collection condition to obtain a filtered user collection; and
the process of generating the attribute information of the users in the user collection correlated with the event is:
generating the attribute information of the users in the filtered user collection correlated with the event.

6. The method of claim 5, wherein:
the process of filtering the collected user collection according to the collection condition to obtain the filtered user collection is:
reading (401) a user in the collected user collection, and obtaining (406) information about the read user from an original user information base; and adding (408) the information about the read user to the filtered user collection if the read user complies with the collection condition.

7. The method of any of claims 1-5, wherein:
the query unread events process comprises: determining the time range and space range of the event to occur according to the time range, space range and a repetition frequency which are set for the read event.

8. An apparatus for generating user attribute information, comprising:
an event storing unit (601), adapted to store event information and send the event information out,
the event storing unit comprises an event information repository (6011) adapted to store the event information and an event trigger (6012) which is adapted to query unread events in the event information repository, after finding that the event information repository contains an unread event, read the event, and send the event information to a user information generating unit if determining that a read event meets trigger conditions;
the user information generating unit (602), adapted to: receive the event information which is sent by the event storing unit and carries a time range, a space range and an event ID of an event, obtain extended attributes of the event from the event information corresponding to the event ID, and generate attribute information of users in a user collection collected by a user collecting unit; and
the user collecting unit (603), adapted to collect users compliant with preset conditions according to the time range and space range in the event information received by the user information generating unit to form a user collection;
a user information database (6025), adapted to store user entries which carry user attribute information,
wherein the user information generating unit (602) is configured to, after finding that the user information base contains no user entry for a user in the user collection, create a new user entry in the user information base, add the event corresponding to the event ID and the extended attributes of the event to the user entry, and set a correlation count of the event and a correlation weight of the extended attributes of the event in said user entry to obtain preference attributes of the user;
after finding that the user information base contains the user entry for a user in the user collection, if determining that the user entry contains the event corresponding to the event ID, the user information generating unit (602) is configured to increase the correlation count of the event, and further judge whether the user entry contains the extended attributes of the event; if the user entry contains the extended attributes of the event, the user information generating unit is configured to increase the correlation weight of the extended attributes of the event in the user entry; if the user entry contains no extended attribute of the event, the user information generating unit is configured to add a new extended attribute of the event in the user entry and set the correlation weight of the extended attribute.

9. The apparatus of claim 8, wherein the user collecting unit comprises:
a user collection controller (6031), adapted to obtain the event information received by the user information generating unit; and
a user collection interface (6032), adapted to collect the users compliant with the preset conditions according to the event information obtained by the user collection controller to form the user collection.

10. The apparatus of claim 9, wherein:
the process of the user collection interface (6032) collecting the users compliant with the preset conditions to form the user collection includes:
collecting, by the user collection interface, user signals within the time range and space range to obtain the user collection; and further includes one or both of the following steps:
if the event information further carries a collection frequency, collecting the users at the collection frequency;
if the event information further carries a positioning mode, collecting the users according to the positioning mode.

11. The apparatus of any of claims 8-10, wherein the user information generating unit (602) comprises:
an event/user correlating unit (6021), adapted to: receive the event information from the event storing unit, wherein the event information carries the time range, space range and event ID of the event, and carries collection condition;
a user filtering unit (6022), adapted to filter the users in the user collection collected by the user collecting unit according to the collection condition to obtain a filtered user collection; and
a user information generator (6023), adapted to: obtain the extended attributes of the event in the event information corresponding to the event ID, and generate the attribute information corresponding to the users in the filtered user collection correlated with the event according to the extended attributes of the event.

12. The apparatus of claim 11, further comprising:
an original user information base (6024), adapted to store user information, wherein:
the user filtering unit (6022) reads a user in the user collection collected by the user collecting unit, and obtains information about the read user from the original user information base; and adds the read user to the new user collection if the read user complies with the collection condition.

13. The apparatus of any of claims 8-11, wherein
the event trigger (6012), further adapted to: determine the time range and space range of the event to occur according to the time range, space range and a repetition frequency which are set for the read event.

## Patentansprüche

1. Verfahren zum Erzeugen von Anwenderattributinformationen, das Folgendes umfasst:
Empfangen (201) von Ereignisinformationen, die einen Zeitbereich, einen Raumbereich und eine Ereignis-ID eines Ereignisses führen und die in einer Ereignisinformationsablage gespeichert sind;
wobei die Ereignisinformationen durch einen Systemanwender eingegeben werden, Abfragen (301) nicht gelesener Ereignisse in der Ereignisinformationsablage nach dem Erkennen, dass die Ereignisinformationsablage ein ungelesenes Ereignis enthält, Lesen des Ereignisses und Senden der Ereignisinformationen zu einer Anwenderinformationserzeugungseinheit, falls bestimmt wird, dass ein gelesenes Ereignis Auslösebedingungen erfüllt;
Sammeln (202) von Anwendern, die mit voreingestellten Bedingungen konform sind, gemäß dem Zeitbereich und dem Raumbereich des Ereignisses, um eine Anwenderkollektion zu bilden;
Erhalten (204) erweiterter Attribute des Ereignisses aus den Ereignisinformationen, die der Ereignis-ID entsprechen, durch die Anwenderinformationserzeugungseinheit; und
Erzeugen (205) von Attributinformationen der Anwender in der Anwenderkollektion, die mit dem Ereignis korreliert ist, gemäß den erweiterten Attributen des Ereignisses durch die Anwenderinformationserzeugungseinheit;
wobei der Prozess des Erzeugens der Attributinformationen der Anwender in der Anwenderkollektion, die mit dem Ereignis korreliert ist, Folgendes umfasst:
nach dem Erkennen (502), dass eine Anwenderinformationsbasis keinen Anwendereintrag für einen Anwender in der Anwenderkollektion enthält, Erzeugen (503) eines neuen Anwendereintrags in der Anwenderinformationsbasis, Hinzufügen (506) des Ereignisses, das der Ereignis-ID entspricht, und der erweiterten Attribute des Ereignisses zu dem Anwendereintrag und Einstellen eines Korrelationszählwerts des Ereignisses und eines Korrelationsgewichts der erweiterten Attribute des Ereignisses in dem Anwendereintrag, um Präferenzattribute des Anwenders zu erhalten;
nach dem Erkennen (502), dass die Anwenderinformationsbasis den Anwendereintrag für einen Anwender in der Anwenderkollektion enthält, falls der Anwendereintrag das Ereignis enthält, das der Ereignis-ID (504) entspricht, Erhöhen (505) des Korrelationszählwerts des Ereignisses, und ferner Beurteilen (508), ob der Anwendereintrag die erweiterten Attribute des Ereignisses enthält; falls der Anwendereintrag die erweiterten Attribute des Ereignisses enthält, Erhöhen (509) des Korrelationsgewichts der erweiterten Attribute des Ereignisses in dem Anwendereintrag; falls der Anwendereintrag keine erweiterten Attribute des Ereignisses enthält, Hinzufügen (510) eines neuen erweiterten Attributs des Ereignisses in den Anwendereintrag und Einstellen des Korrelationsgewichts des erweiterten Attributs.

2. Verfahren nach Anspruch 1, wobei:
der Prozess des Erhaltens der erweiterten Attribute des Ereignisses aus den Ereignisinformationen, die der Ereignis-ID entsprechen, ist:
Erhalten der erweiterten Attribute des Ereignisses aus den empfangenen Ereignisinformationen, falls die Ereignisinformationen ferner die erweiterten Attribute des Ereignisses führen; oder
Erhalten der erweiterten Attribute des Ereignisses in den Ereignisinformationen, die der Ereignis-ID entsprechen, aus der Ereignisinformationsablage gemäß der Ereignis-ID in den empfangenen Ereignisinformationen.

3. Verfahren nach Anspruch 1, wobei:
die empfangenen Ereignisinformationen ferner eine Sammelfrequenz führen; und
der Prozess des Sammelns der Anwender, die mit den voreingestellten Bedingungen konform sind, um die Anwenderkollektion zu bilden, ist: Sammeln von Anwendersignalen innerhalb des Zeitbereichs und Raumbereichs mit der Sammelfrequenz in den Ereignisinformationen, um die Anwenderkollektion zu bilden.

4. Verfahren nach Anspruch 1, wobei:
die empfangenen Ereignisinformationen ferner einen Positionierungsmodus führen; und
der Prozess des Sammelns der Anwender, die mit den voreingestellten Bedingungen konform sind, um die Anwenderkollektion zu bilden, ist: nach dem Auswählen des Positionierungsmodus Sammeln von Anwendersignalen innerhalb des Zeitbereichs und des Raumbereichs gemäß dem ausgewählten Positionierungsmodus, um die Anwenderkollektion zu bilden.

5. Verfahren nach einem der Ansprüche 1-4, wobei:
die empfangenen Ereignisinformationen ferner eine Sammelbedingung führen;
das Verfahren nach dem Sammeln der Anwender, die mit den voreingestellten Bedingungen konform sind, um die Anwenderkollektion zu bilden, ferner Folgendes umfasst: Filtern der gesammelten Anwenderkollektion gemäß der Sammelbedingung, um eine gefilterte Anwenderkollektion zu erhalten; und
der Prozess des Erzeugens der Attributinformationen der Anwender in der Anwenderkollektion, die mit dem Ereignis korreliert, ist:
Erzeugen der Attributinformationen der Anwender in der gefilterten Anwenderkollektion, die mit dem Ereignis korreliert ist.

6. Verfahren nach Anspruch 5, wobei:
der Prozess des Filterns der gesammelten Anwenderkollektion gemäß der Sammelbedingung, um die gefilterte Anwenderkollektion zu erhalten ist:
Lesen (401) eines Anwenders in der gesammelten Anwenderkollektion und Erhalten (406) von Informationen über den gelesenen Anwender aus einer ursprünglichen Anwenderinformationsbasis; und Hinzufügen (408) der Informationen über den gelesenen Anwender zu der gefilterten Anwenderkollektion, falls der gelesene Anwender mit der Anwenderkollektion konform ist.

7. Verfahren nach einem der Ansprüche 1-5, wobei:
der Prozess der Abfrage ungelesener Ereignisse Folgendes umfasst: Bestimmen des Zeitbereichs und des Raumbereichs des Ereignisses, das auftreten soll, gemäß dem Zeitbereich, Raumbereich und einer Wiederholungsfrequenz, die für das gelesene Ereignis eingestellt sind.

8. Vorrichtung zum Erzeugen von Anwenderattributinformationen, die Folgendes umfasst:
eine Ereignisspeichereinheit (601), die ausgelegt ist, Ereignisinformationen zu speichern und die Ereignisinformationen auszusenden,
wobei die Ereignisspeichereinheit eine Ereignisinformationsablage (6011), die ausgelegt ist, die Ereignisinformationen zu speichern, und eine Ereignisauslöseeinheit (6012), die ausgelegt ist, ungelesene Ereignisse in der Ereignisinformationsablage abzufragen, nachdem erkannt wurde, dass die Ereignisinformationsablage ein ungelesenes Ereignis enthält, das Ereignis zu lesen und die Ereignisinformationen zu einer Anwenderinformationserzeugungseinheit zu senden, falls bestimmt wird, dass ein gelesenes Ereignis Auslösebedingungen erfüllt, umfasst;
die Anwenderinformationserzeugungseinheit (602), die ausgelegt ist: die Ereignisinformationen zu empfangen, die durch die Ereignisspeichereinheit gesendet sind und einen Zeitbereich, einen Raumbereich und eine Ereignis-ID eines Ereignisses führen, erweiterte Attribute des Ereignisses aus den Ereignisinformationen, die der Ereignis-ID entsprechen, zu erhalten und Attributinformationen von Anwendern in einer durch eine Anwendersammeleinheit gesammelten Anwenderkollektion zu erzeugen; und
die Anwendersammeleinheit (603), die ausgelegt ist, Anwender, die mit voreingestellten Bedingungen konform sind, gemäß dem Zeitbereich und Raumbereich in den Ereignisinformationen, die durch die Anwenderinformationserzeugungseinheit empfangen werden, zu sammeln, um eine Anwenderkollektion zu bilden;
eine Anwenderinformationsdatenbank (6025), die ausgelegt ist, Anwendereinträge, die Anwenderattributinformationen führen, zu speichern,
wobei die Anwenderinformationserzeugungseinheit (602) konfiguriert ist, nach dem Erkennen, dass die Anwenderinformationsbasis keinen Anwendereintrag für einen Anwender in der Anwenderkollektion enthält, einen neuen Anwendereintrag in der Anwenderinformationsbasis zu erzeugen, das Ereignis, das der Ereignis-ID entspricht, und die erweiterten Attribute des Ereignisses zu dem Anwendereintrag hinzuzufügen und einen Korrelationszählwert des Ereignisses und ein Korrelationsgewicht der erweiterten Attribute des Ereignisses in dem Anwendereintrag einzustellen, um Präferenzattribute des Anwenders zu erhalten,
wobei die Anwenderinformationserzeugungseinheit (602) konfiguriert ist, nach dem Erkennen, dass die Anwenderinformationsbasis den Anwendereintrag für einen Anwender in der Anwenderkollektion enthält, falls bestimmt wird, dass der Anwendereintrag das Ereignis, das der Ereignis-ID entspricht, enthält, den Korrelationszählwert des Ereignisses zu erhöhen, und ferner zu beurteilen, ob der Anwendereintrag die erweiterten Attribute des Ereignisses enthält; die Anwenderinformationserzeugungseinheit konfiguriert ist, falls der Anwendereintrag die erweiterten Attribute des Ereignisses enthält, das Korrelationsgewicht der erweiterten Attribute des Ereignisses in dem Anwendereintrag zu erhöhen; die Anwenderinformationserzeugungseinheit konfiguriert ist, falls der Anwendereintrag keine erweiterten Attribute des Ereignisses enthält, ein neues erweitertes Attribut des Ereignisses in den Anwendereintrag hinzuzufügen und das Korrelationsgewicht des erweiterten Attributs einzustellen.

9. Vorrichtung nach Anspruch 8, wobei die Anwendersammeleinheit Folgendes umfasst:
eine Anwenderkollektionssteuereinheit (6031), die ausgelegt ist, die durch die Anwenderinformationserzeugungseinheit empfangenen Ereignisinformationen zu erhalten; und
eine Anwenderkollektionsschnittstelle (6032), die ausgelegt ist, die Anwender, die mit den voreingestellten Bedingungen konform sind, gemäß den durch die Anwendersammelsteuereinheit erhaltenen Ereignisinformationen zu sammeln, um die Anwenderkollektion zu bilden.

10. Vorrichtung nach Anspruch 9, wobei:
der Prozess, dass die Anwenderkollektionsschnittstelle (6032) die Anwender, die mit den voreingestellten Bedingungen konform sind, sammelt, um die Anwenderkollektion zu bilden, Folgendes enthält:
Sammeln von Anwendersignalen innerhalb des Zeitbereichs und des Raumbereichs durch die Anwenderkollektionsschnittstelle, um die Anwenderkollektion zu erhalten; und ferner einen oder beide der folgenden Schritte enthält:
falls die Ereignisinformationen ferner eine Sammelfrequenz führen, Sammeln der Anwender mit der Sammelfrequenz;
falls die Ereignisinformationen ferner einen Positionierungsmodus führen, Sammeln der Anwender gemäß dem Positionierungsmodus.

11. Vorrichtung nach einem der Ansprüche 8-10, wobei die Anwenderinformationserzeugungseinheit (602) Folgendes umfasst:
eine Ereignis/Anwender-Korrelationseinheit (6021), die ausgelegt ist:
Ereignisinformationen von der Ereignisspeichereinheit zu empfangen, wobei die Ereignisinformationen den Zeitbereich, den Raumbereich und die Ereignis-ID des Ereignisses führen, und die Sammelbedingung führen;
eine Anwenderfiltereinheit (6022), die ausgelegt ist, die Anwender in der durch die Anwendersammeleinheit gesammelten Anwenderkollektion gemäß der Sammelbedingung zu filtern, um eine gefilterte Anwenderkollektion zu erhalten; und eine Anwenderinformationserzeugungseinheit (6023), die ausgelegt ist: die erweiterten Attribute des Ereignisses in den Ereignisinformationen zu erhalten, die der Ereignis-ID entsprechen, und die Attributinformationen, die den Anwendern in der gefilterten Anwenderkollektion, die mit dem Ereignis korreliert sind, entsprechen, gemäß den erweiterten Attributen des Ereignisses zu erzeugen.

12. Vorrichtung nach Anspruch 11, die ferner Folgendes umfasst:
eine ursprüngliche Anwenderinformationsbasis (6024), die ausgelegt ist, Anwenderinformationen zu speichern, wobei:
die Anwenderfiltereinheit (6022) einen Anwender in der durch die Anwendersammeleinheit gesammelten Anwenderkollektion liest und Informationen über den gelesenen Anwender aus der ursprünglichen Anwenderinformationsbasis erhält; und den gelesenen Anwender zu der neuen Anwenderkollektion hinzufügt, falls der gelesene Anwender mit der Sammelbedingung konform ist.

13. Vorrichtung nach einem der Ansprüche 8-11, wobei
die Ereignisauslöseeinheit (6012) ferner ausgelegt ist: den Zeitbereich und den Raumbereich des Ereignisses, das auftreten soll, gemäß dem Zeitbereich, Raumbereich und einer Wiederholungsfrequenz, die für das gelesene Ereignis eingestellt sind, zu bestimmen.

## Revendications

1. Procédé permettant de générer des informations d'attribut utilisateur, comprenant les étapes suivantes :
recevoir (201) des informations d'événement qui contiennent une plage de temps, une plage d'espace et un ID d'événement d'un événement et qui sont stockées dans un dépôt d'informations d'événement ;
les informations d'événement étant entrées par un utilisateur du système,
demander (301) des événements non lus dans le dépôt d'informations d'événement, après avoir trouvé que le dépôt d'informations d'événement contient un événement non lu, lire l'événement, et envoyer les informations d'événement à une unité de génération d'informations utilisateur s'il est déterminé qu'un événement lu répond à des conditions de déclenchement ;
collecter (202) des utilisateurs conformes à des conditions prédéfinies selon la plage de temps et la plage d'espace de l'événement pour former une collection d'utilisateurs ;
obtenir (204), par l'unité de génération d'informations utilisateur, des attributs étendus de l'événement à partir des informations d'événement correspondant à l'ID d'événement ; et
générer (205), par l'unité de génération d'informations utilisateur, des informations d'attribut des utilisateurs présents dans la collection d'utilisateurs corrélée à l'événement selon les attributs étendus de l'événement ;
le processus consistant à générer les informations d'attribut des utilisateurs présents dans la collection d'utilisateurs corrélée à l'événement comportant les étapes suivantes :
après avoir trouvé (502) qu'une base d'informations utilisateur ne contient pas d'entrée utilisateur pour un utilisateur présent dans la collection d'utilisateurs, créer (503) une nouvelle entrée utilisateur dans la base d'informations utilisateur, ajouter (506) l'événement correspondant à l'ID d'événement et les attributs étendus de l'événement dans l'entrée utilisateur, et créer un compte de corrélations de l'événement et un poids de corrélation des attributs étendus de l'événement dans ladite entrée utilisateur pour obtenir des attributs de préférence de l'utilisateur ;
après avoir trouvé (502) que la base d'informations utilisateur contient l'entrée utilisateur pour un utilisateur présent dans la collection d'utilisateurs, si l'entrée utilisateur contient l'événement correspondant à l'ID d'événement (504), augmenter (505) le compte de corrélations de l'événement, et juger (508) en outre si l'entrée utilisateur contient les attributs étendus de l'événement ; si l'entrée utilisateur contient les attributs étendus de l'événement, augmenter (509) le poids de corrélation des attributs étendus de l'événement dans l'entrée utilisateur ; si l'entrée utilisateur ne contient pas d'attribut étendu de l'événement, ajouter (510) un nouvel attribut étendu de l'événement dans l'entrée utilisateur et fixer le poids de corrélation de l'attribut étendu.

2. Procédé selon la revendication 1, dans lequel :
le processus consistant à obtenir les attributs étendus de l'événement à partir des informations d'événement correspondant à l'ID d'événement comprend :
obtenir les attributs étendus de l'événement à partir des informations d'événement reçues si les informations d'événement contiennent en outre les attributs étendus de l'événement; ou
obtenir les attributs étendus de l'événement dans les informations d'événement correspondant à l'ID d'événement à partir du dépôt d'informations d'événement selon l'ID d'événement présent dans les informations d'événement reçues.

3. Procédé selon la revendication 1, dans lequel :
les informations d'événement reçues contiennent en outre une fréquence de collecte ; et
le processus consistant à collecter les utilisateurs conformes aux conditions prédéfinies pour former la collection d'utilisateurs comprend : collecter des signaux utilisateur compris dans la plage de temps et la plage d'espace à la fréquence de collecte dans les informations d'événement pour former la collection d'utilisateurs.

4. Procédé selon la revendication 1, dans lequel :
les informations d'événement reçues contiennent en outre un mode de positionnement ; et
le processus consistant à collecter les utilisateurs conformes aux conditions prédéfinies pour former la collection d'utilisateurs comprend : après avoir sélectionné le mode de positionnement, collecter des signaux utilisateur compris dans la plage de temps et dans la plage d'espace selon le mode de positionnement sélectionné pour former la collection d'utilisateurs.

5. Procédé selon l'une quelconque des revendications 1 à 4, dans lequel :
les informations d'événement reçues contiennent en outre une condition de collecte ;
après avoir collecté les utilisateurs conformes aux conditions prédéfinies pour former la collection d'utilisateurs, le procédé comprend en outre : filtrer la collection d'utilisateurs collectée selon la condition de collecte pour obtenir une collection d'utilisateurs filtrée ; et
le processus consistant à générer les informations d'attribut des utilisateurs présents dans la collection d'utilisateurs corrélée à l'événement comprend :
générer les informations d'attribut des utilisateurs présents dans la collection d'utilisateurs filtrée corrélée à l'événement.

6. Procédé selon la revendication 5, dans lequel :
le processus consistant à filtrer la collection d'utilisateurs collectée selon la condition de collecte pour obtenir la collection d'utilisateurs filtrée comprend :
lire (401) un utilisateur dans la collection d'utilisateurs collectée, et obtenir (406) des informations concernant l'utilisateur lu à partir d'une base d'informations utilisateur originale ; et ajouter (408) les informations concernant l'utilisateur lu dans la collection d'utilisateurs filtrée si l'utilisateur lu est conforme à la condition de collecte.

7. Procédé selon l'une quelconque des revendications 1 à 5, dans lequel :
le processus consistant à demander des événements non lus comprend : déterminer la plage de temps et la plage d'espace de l'événement devant se produire selon la plage de temps, la plage d'espace et une fréquence de répétition qui sont définies pour l'événement lu.

8. Appareil permettant de générer des informations d'attribut utilisateur, comprenant :
une unité de stockage d'événements (601), conçue pour stocker des informations d'événement et transmettre les informations d'événement,
l'unité de stockage d'événements comporte un dépôt d'informations d'événement (6011) conçu pour stocker les informations d'événement et un déclencheur d'événement (6012) qui est conçu pour demander des événements non lus dans le dépôt d'informations d'événement ; après avoir trouvé que le dépôt d'informations d'événement contient un événement non lu, lire l'événement, et envoyer les informations d'événement à une unité de génération d'informations utilisateur s'il est déterminé qu'un événement lu répond aux conditions de déclenchement ;
l'unité de génération d'informations utilisateur (602), conçue pour : recevoir les informations d'événement qui sont envoyées par l'unité de stockage d'événements et contenant une plage de temps, une plage d'espace et un ID d'événement d'un événement, obtenir des attributs étendus de l'événement à partir des informations d'événement correspondant à l'ID d'événement, et générer les informations d'attribut des utilisateurs présents dans une collection d'utilisateurs collectée par une unité de collecte d'utilisateurs ; et
l'unité de collecte d'utilisateurs (603), conçue pour collecter des utilisateurs conformes à des conditions prédéfinies selon la plage de temps et la plage d'espace contenues dans les informations d'événement reçues par l'unité de génération d'informations utilisateur pour former une collection d'utilisateurs ;
une base de données d'informations utilisateur (6025), conçue pour stocker des entrées utilisateur qui contiennent des informations d'attribut utilisateur,
l'unité de génération d'informations utilisateur (602) étant configurée pour créer, après avoir trouvé que la base d'informations utilisateur ne contient pas d'entrée utilisateur pour un utilisateur présent dans la collection d'utilisateurs, une nouvelle entrée utilisateur dans la base d'informations utilisateur, ajouter l'événement correspondant à l'ID d'événement et les attributs étendus de l'événement dans l'entrée utilisateur, et créer un compte de corrélations de l'événement et un poids de corrélation des attributs étendus de l'événement dans ladite entrée utilisateur pour obtenir des attributs de préférence de l'utilisateur ;
après avoir trouvé que la base d'informations utilisateur contient l'entrée utilisateur pour un utilisateur présent dans la collection d'utilisateurs, s'il est déterminé que l'entrée utilisateur contient l'événement correspondant à l'ID d'événement, l'unité de génération d'informations utilisateur (602) est configurée pour augmenter le compte de corrélations de l'événement, et en outre juger si l'entrée utilisateur contient les attributs étendus de l'événement ; si l'entrée utilisateur contient les attributs étendus de l'événement, l'unité de génération d'informations utilisateur est configurée pour augmenter le poids de corrélation des attributs étendus de l'événement dans l'entrée utilisateur ; si l'entrée utilisateur ne contient pas d'attribut étendu de l'événement, l'unité de génération d'informations utilisateur est configurée pour ajouter un nouvel attribut étendu de l'événement dans l'entrée utilisateur et fixer le poids de corrélation de l'attribut étendu.

9. Appareil selon la revendication 8, dans lequel l'unité de collecte d'utilisateurs comprend :
un contrôleur de collecte d'utilisateurs (6031), conçu pour obtenir les informations d'événement reçues par l'unité de génération d'informations utilisateur ; et
une interface de collecte d'utilisateurs (6032), conçue pour collecter les utilisateurs conformes aux conditions prédéfinies selon les informations d'événement obtenues par le contrôleur de collecte d'utilisateurs pour former la collection d'utilisateurs.

10. Appareil selon la revendication 9, dans lequel :
le processus consistant à collecter, par l'interface de collecte d'utilisateurs (6032), les utilisateurs conformes aux conditions prédéfinies pour former la collection d'utilisateurs comprend :
collecter, par l'interface de collecte d'utilisateurs, des signaux utilisateur compris dans la plage de temps et la plage d'espace pour obtenir la collection d'utilisateurs ;
et comprend en outre les ou l'une des deux étapes suivantes :
si les informations d'événement contiennent en outre une fréquence de collecte,
collecter les utilisateurs à la fréquence de collecte ;
si les informations d'événement contiennent en outre un mode de positionnement,
collecter les utilisateurs selon le mode de positionnement.

11. Appareil selon l'une quelconque des revendications 8 à 10, dans lequel l'unité de génération d'informations utilisateur (602) comprend :
une unité de corrélation événement/utilisateur (6021), conçue pour : recevoir les informations d'événement à partir de l'unité de stockage d'événements, les informations d'événement contenant la plage de temps, la plage d'espace et l'ID d'événement de l'événement, et incluant une condition de collecte ;
une unité de filtrage d'utilisateurs (6022), conçue pour filtrer les utilisateurs présents dans la collection d'utilisateurs collectée par l'unité de collecte d'utilisateurs selon la condition de collecte pour obtenir une collection d'utilisateurs filtrée ; et
un générateur d'informations utilisateur (6023), conçu pour : obtenir les attributs étendus de l'événement dans les informations d'événement correspondant à l'ID d'événement, et générer les informations d'attribut correspondant aux utilisateurs dans la collection d'utilisateurs filtrée corrélée à l'événement selon les attributs étendus de l'événement.

12. Appareil selon la revendication 11, comprenant en outre :
une base d'informations utilisateur originale (6024), conçue pour stocker des informations utilisateur :
l'unité de filtrage utilisateur (6022) lisant un utilisateur dans la collection d'utilisateurs collectée par l'unité de collecte d'utilisateurs, et obtenant des informations concernant l'utilisateur lu à partir de la base d'informations utilisateur originale ; et ajoutant l'utilisateur lu à la nouvelle collection d'utilisateurs si l'utilisateur lu est conforme à la condition de collecte.

13. Appareil selon l'une quelconque des revendications 8 à 11, dans lequel le déclencheur d'événement (6012) est en outre conçu pour : déterminer la plage de temps et la plage d'espace de l'événement devant se produire selon la plage de temps, la plage d'espace et une fréquence de répétition qui sont définies pour l'événement lu.
